# EUROPÄISCHE PATENTSCHRIFT

(11) **EP 4 359 256 B1**
(45) Veröffentlichungstag und Bekanntmachung des Hinweises auf die Patenterteilung: **22.01.2025**
(21) Anmeldenummer: 22735767.0
(22) Anmeldetag: 14.06.2022
(51) Int. Cl.: B60P 7/13

(54) **CONTAINERVERRIEGELUNGSVORRICHTUNG SOWIE CONTAINERVERRIEGELUNGSVERFAHREN**
CONTAINER LOCKING DEVICE AND CONTAINER LOCKING METHOD
DISPOSITIF DE VERROUILLAGE DE CONTENEUR ET PROCÉDÉ DE VERROUILLAGE DE CONTENEUR

(30) Priorität: 23.06.2021 DE 102021116280; 01.09.2021 DE 102021122625
(43) Veröffentlichungstag der Anmeldung: 01.05.2024
(73) Patentinhaber: Hamburger Patent Schmiede GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2022/100442
(87) Internationale Veröffentlichungsnummer: WO 2022/268257

(56) Entgegenhaltungen:
- DE-A1- 102004 045 665
- DE-A1- 102006 002 654
- DE-U1- 202010 000 387
- DE-U1- 202018 107 146

## Beschreibung

Die Erfindung betrifft eine Containerverriegelungsvorrichtung auf einem Fahrzeug, zur Verriegelung eines auf einer Ladefläche des Fahrzeugs zu transportierenden Containers mit einem Eckbeschlag, aufweisend ein Verriegelungsgehäuse, einen Verriegelungsbolzen und einen Antrieb, wobei der Verriegelungsbolzen einen Schaft und einen Verriegelungskopf hat, der in entriegeltem Zustand über eine Öffnung des Eckbeschlags des Containers einführbar und in verriegeltem Zustand den Container über die Öffnung des Eckbeschlages hintergreifende Vorsprünge sichert, der Verriegelungsbolzen mit seinem Schaft in dem Verriegelungsgehäuse sowohl axial verschiebbar als auch um seine Achse drehbar gelagert ist, ein Keilschlitten im Verriegelungsgehäuse lateral, also senkrecht zur Achse des Verriegelungsbolzens, hin- und herbewegbar gelagert und von dem Antrieb antreibbar ist, und der Keilschlitten eine Auflaufschräge aufweist, die mit dem Verriegelungsbolzen während der Lateralbewegung des Keilschlittens in Eingriff steht und dem Verriegelungsbolzen eine axiale Bewegung und eine Drehbewegung um 90° erteilt. Ferner betrifft die Erfindung ein Containerverriegelungsverfahren, das mit o. g. Vorrichtung ausführbar ist.

Eine derartige Verriegelungsvorrichtung für Container auf einem Fahrzeug ist aus der EP 1 075 400 B1 bekannt. Dabei wird als Antrieb für die Linearbewegung ein Membranspeicherantrieb vorgeschlagen, der nur bei Druckluftbeaufschlagung in seiner Arbeitslage gehalten wird und bei Druckabfall in seine entlastete Lage mittels einer Feder rückgestellt wird. Somit ist es bei dieser Verriegelungsvorrichtung erforderlich, vor dem Beladen des Fahrzeugs zunächst den Antrieb durch Druckluftbeaufschlagung zu aktivieren, um die Verriegelungsvorrichtung in ihren entriegelten Zustand zu bringen, um dann den Container mit seinem Eckbeschlag über den entriegelten Verriegelungskopf aufladen zu können. Bei Druckentlastung wird dann der Membranspeicher Feder belastet in seine Grundstellung rückgestellt, womit sich der Verriegelungsbolzen dreht und senkt.

Davon ausgehend ist in der noch nicht veröffentlichten DE 10 2021 112 894 des gleichen Anmelders eine Containerverriegelungsvorrichtung zur Verriegelung eines auf einer Ladefläche eines Fahrzeugs zu transportierenden Containers mit einem Eckbeschlag angemeldet.

Die DE 102 02 190 A1 beschreibt eine zur EP 1 075 400 B1 ähnliche Container-Verriegelungsvorrichtung, bei der jedoch der Verriegelungsbolzen an seinem Schaft keine zu seinem Umfang tangentiale, ansteigende Aussparung aufweist, sondern zwei lateral übereinander und versetzt angeordnete Nockenpaare. Ferner kann die Vorrichtung eine Zusatzsicherung aufweisen, die in allen Stellungen des Verriegelungsbolzens (Drehzapfen) ein vertikales Herausziehen des Drehzapfes in Richtung des Containers verhindert. Nachteilig ist, dass die Zusatzsicherung manuell zu setzen und zu entsichern ist.

Ferner ist aus der DE 10 2006 002 654 A1 eine Vorrichtung zur Betätigung einer Verriegelung eines Verriegelungskopfes mit einem Eckbeschlag eines Containers bekannt, die eine pneumatische Kolbenzylinderanordnung aufweist, mit der eine ausfahrbare und absenkbare Klaue des Verriegelungskopfes von einer eingefahrenen Lage in einer ausgefahrenen Lage und von dort in die Riegelstellung und wieder zurück zu bringen ist. Auch hier ist eine ergänzende Sperre nicht vorgesehen, so dass die Vorrichtung allein durch den pneumatischen Antrieb in Riegelstellung gehalten wird. Eine technisch ähnliche Gestaltung mit einer hydraulischen Betätigung ist aus der DE 20 2008 011 526 U1 bekannt

Ferner sind Horizontalverriegelungsvorrichtungen an Gooseneck-Aufliegern bekannt. Sie werden an der in Fahrtrichtung vordersten Position am Auflieger verwendet, um Container mit Gooseneck-Tunnel in ihrer vorderen Position vor Abheben und Verrutschen zu sichern. An dieser Position ist nicht genügend Freiraum unterhalb des Containers, um die üblicherweise zur Fixierung von Standardcontainern auf einem Auflieger verwendeten sogenannten "Twistlocks" mit dem dafür erforderlichen Unterbau (Querträger) vorzusehen. Da man jedoch durch Verwendung der Gooseneck-Chassis mit sogenannten High Cube Containern mit Gooseneck-Tunnel etwa 10 bis 14 cm mehr nutzbare Ladehöhe erhält, ohne die international häufig vorgeschriebene Gesamtladehöhe des Sattelzuges von 4 m zu überschreiten, ist dieser erhebliche Aufwand gerechtfertigt.

Um auf derartigen Gooseneck-Aufliegern bzw. Chassis auch Container ohne Gooseneck-Tunnel verladen zu können, sind sogenannte Doppelverriegelungen bekannt, bei denen eine um eine horizontale Achse schwenkbare Konsole so an die Position des Riegelbolzens herunterklappbar ist, dass diese Konsole mit dem Riegelbolzen verrastbar ist und eine erhöhte Auflagefläche für Container ohne Gooseneck-Tunnel bietet. An dieser Konsole ist meist ein herkömmliches Twistlock für die Verriegelung des Containers vorgesehen. Eine derartige Doppelverriegelung ist beispielsweise von der Firma Jost-Werke GmbH, Siemensstraße , 63263 Neu-Isenburg, unter der Bezeichnung FB 88-14V bekannt. Eine derartige Doppelverriegelung ist auch in der EP 0 934 848 A2 und in Weiterbildung auch in der DE 10 2014 218 891 A1 beschrieben.

Die EP 3 666 591 A1 beschreibt eine Containerverriegelung mit Horizontal- und Vertikalverriegelungsoption, die unabhängig voneinander betätigbar sind.

Nachteilig ist jedoch, dass die Horizontalverriegelungen, insbesondere wie sie für Gooseneck-Auflieger an der vordersten Position des Aufliegers für die Fixierung von Containern mit Gooseneck-Tunneln verwendet werden, manuell verriegelt und manuell gelöst werden müssen. Vor dem Entladen und nach dem Beladen müssen die bekannten Horizontalverriegelungen somit jeweils manuell betätigt werden. Dies ist neben dem Zeitaufwand auch ein erhebliches Gefährdungspotential für den Kraftfahrer.

Daher wurde in der DE 20 2010 000 387 eine Horizontalverriegelungsvorrichtung mit einer Halbautomatik vorgeschlagen, bei der der Riegelbolzen eine Federbelastung in Richtung des Transportzustandes und an seinem dem Eckbeschlag zugewandten Ende eine Auflaufschräge aufweist, wobei der Riegelbolzen eine erste Rastposition für den Transportzustand des Riegelbolzens und eine zweite Rastposition für den eingezogenen Entladezustand hat und ein Tastmittel zur Feststellung des Beladezustandes der Ladefläche vorgesehen ist, wobei zum Entladen der Riegelbolzen manuell in den Entladezustand gebracht und nach dem Entladen der Riegelbolzen vom Tastmittel freigegeben wird. Somit wird eine automatische Verriegelung und Verrastung des Containers beim Beladen ermöglicht. Das neben dem Riegelbolzen angeordnete Tastmittel erlaubt die Feststellung, dass in der Ladeposition ein Container aufliegt. Nachteilig ist, dass das Tastmittel vielteilig ausgebildet ist und aufgrund seiner Komplexität, beispielsweise bei ungenügender Wartung, zu Fehlfunktionen führen kann und die Verriegelungsvorrichtung in der Herstellung kostenaufwendig ist.

Aus der US 5,575,599 sind von der Gewichtskraft des aufzuladenden Containers auslösbare Horizontalverriegelungen bekannt, die nicht im verriegelten Zustand gesperrt sind und folglich wenig Sicherheit bei Unfällen oder besonders starken Beanspruchungen bieten. Ein ähnliches System iat aus der US 2015/0232015 A1 bekannt.

Die DE 197 20 238 A1 beschreibt eine Containerverriegelungsvorrichtung mit einem drehangetriebenen Verriegelungskopf, bei dem gleichzeitig ein horizontal zu bewegender Steckzapfen für sogenannte Gooseneck-Containerchassis über ein Zahnradsegment mit der Drehbewegung lateral ausgefahren wird.

Die DE 10 2004 045 665 A1 zeigt einen Querträger zum stirnseitigen Einbau in ein Chassis, bei dem ein Twistlock und ein horizontaler Steckzapfen unabhängig voneinander verschiebbar angeordnet sind.

Die JP 2011-051559 A beschreibt ein Containerchassis mittels Stellzylindern betätigbaren horizontalen und vertikalen Verriegelungsmitteln.

Ausgehend vom eingangs genannten Stand der Technik ist es Aufgabe der Erfindung, eine aktiv angetriebene Containerverriegelung bzw. ein Containerverriegelungsverfahren anzugeben, die bzw. das neben der von unten in den Containereckbeschlag eingreifenden Verriegelung alternativ auch eine Horizontalverriegelung für Gooseneck-Container möglich macht.

Gelöst wird diese Aufgabe mit einer Containerverriegelungsvorrichtung nach Anspruch 1 sowie einem Containerverriegelungsverfahren nach Anspruch 9.

Dadurch, dass ergänzend ein Horizontalriegelbolzen im Verriegelungsgehäuse axial und horizontal verschiebbar gelagert ist, wobei ein Gooseneck-Container im Beladungszustand auf dem Fahrzeug mit seinem Eckbeschlag horizontal neben und anliegend dem Verriegelungsgehäuse angeordnet ist, der Horizontalriegelbolzen ein freies Ende hat, das in entriegeltem Zustand seitlich nicht über das Verriegelungsgehäuse vorsteht und im verriegeltem Zustand in eine seitliche Öffnung des Eckbeschlags des Gooseneck-Containers eingreift und den Gooseneck-Container über die Öffnung sichert, und der Keilschlitten in horizontaler Bewegungsrichtung des Horizontalriegelbolzens hin- und herbewegbar gelagert und mit dem Horizontalriegelbolzen verbunden ist, wird eine Doppelverriegelung angegeben, die sowohl herkömmliche Container mit senkrecht von unten eingreifender Verriegelung, als auch Gooseneck-Container, also Container mit einem Gooseneck-Tunnel mit einer Horizontalverriegelung aktiv angetrieben sichern kann.

Alternativ ist der Keilschlitten in horizontaler Ebene senkrecht zur Bewegungsrichtung des Horizontalriegelbolzens hin- und herbewegbar gelagert und der Horizontalriegelbolzen über einen Keilschieber mit dem Keilschlitten wirkverbunden. Damit wird ebenfalls eine Doppelverriegelung angegeben, die sowohl herkömmliche Container mit senkrecht von unten eingreifender Verriegelung, als auch Gooseneck-Container, also Container mit einem Gooseneck-Tunnel mit einer Horizontalverriegelung aktiv angetrieben sichern kann. Besonders bevorzugt wird durch die Bewegungsumlenkung vom Keilschlitten um 90° auf den Horizontalriegelbolzen eine kompakte Antriebsmöglichkeit realisiert, die wertvolle Ladelänge am Fahrzeug bewahrt.

Wenn der Antrieb einen doppelt wirkenden Pneumatikzylinder mit einer lateral bewegbaren Kolbenstange aufweist, wobei die Kolbenstange mit dem Keilschlitten so wirkverbunden ist, dass beim ersten Teil der Hubbewegung des Antriebes ein Leerhub und beim zweiten Teil der Hubbewegung die Lateralbewegung des Keilschlittens erfolgen, wird der Keilschlitten erst im zweiten Teil der Hubbewegung betätigt.

Dadurch, dass eine Sperreinrichtung am Verriegelungsgehäuse angeordnet ist, die eine mit Federkraft beaufschlagte Sperre aufweist, die in den lateralen Bewegungsweg des Keilschlittens eingreifbar ausgebildet ist, wird ein Verschieben des Keilschlittens und damit des Horizontalriegelbolzens technisch einfach realisiert. Durch die Sperreinrichtung wird eine formschlüssige Sperre aktiviert, die ein unbeabsichtigtes Wiederöffnen der Verriegelungsvorrichtung sowohl hinsichtlich des Horizontalriegelbolzens wie auch des Verriegelungsbolzens durch die Sperre im Bewegungsweg des Keilschlittens verhindert.

Dadurch, dass die Sperreinrichtung einen Lösemechanismus für die Sperre aufweist, der beim Leerhub die Sperre löst, wird es ermöglicht, dass während des Leerhubes, also im ersten Teil der Hubbewegung der Kolbenstange die Sperreinrichtung gelöst wird, damit die Verriegelungsvorrichtung vom verriegelten Zustand in den entriegelten Zustand geöffnet werden kann.

Für den Fall, dass keine ausreichende Druckluftresource und/oder ein Fehler in der Druckluftversorgung bzw. dem Pneumatikzylinder vorliegt, ist eine Notentriegelung vorgesehen, mit der die formschlüssige Sperre der Sperreinrichtung entriegelbar ist.

In weiterer Ausbildung weist die Notentriegelung zwei mit Außengewinde ausgestattete Schubelemente auf, bei dem das erste Schubelement in eine erste Gewindebohrung in der Sperreinrichtung und das zweite Schubelement in eine zweite Gewindebohrung im Verriegelungsgehäuse einschraubbar ist, wobei das erste Schubelement die Sperre freigibt und das zweite Schubelement den Keilschlitten zur Öffnung der Verriegelung verschiebt. Somit kann mit dem ersten Schubelement die Sperreinrichtung gelöst und mit dem zweiten Schubelement die Verriegelungsvorrichtung vom verriegelten Zustand in den entriegelten Zustand verstellt werden, ohne dass eine Kraftbetätigung über den Pneumatikzylinder erforderlich ist (Notentriegelung). Entsprechend kann ein Container oder auch ein Gooseneck-Container bei Ausfall der Pneumatik durch manuelles Betätigen der Notentriegelung entladen werden.

Dadurch, dass in der besonders kompakten Bauweise der Verriegelung mit Bewegungsumlenkung um 90° der Keilschlitten einen zweiten Mitnehmer aufweist, der in den Keilschieber eingreift, wobei der Keilschieber eine Betätigungsschräge hat, die mit einer Lagerfläche des Horizontalriegelbolzens zur axialen Bewegung des Horizontalriegelbolzens zusammenwirkt, wird die erste horizontale, laterale Bewegung des Keilschlittens über die Betätigungsschräge im Keilschieber in eine dazu senkrechte, zweite horizontale Bewegung des axial verschiebbar gelagerten Horizontalriegelbolzens überführt, womit der Keilschlitten in bekannter Weise von einem in seiner Bewegungsrichtung angeordneten Hydraulikzylinder betätigt werden kann, ohne dass dieser Antrieb eine weitere Kürzung der ausnutzbaren Ladelänge bedingt.

Wenn zwischen zweitem Mitnehmer und Keilschieber ein zweiter Leerhub ausgebildet ist, der bei Betätigung des Keilschlittens den Keilschieber nachgeschleppt mitbewegt, und an der Betätigungsschräge eine senkrecht zur Bewegungsrichtung des Horizontalriegelbolzens angeordnete Anlagefläche vorgesehen ist, die mit der Lagerfläche des Horizontalriegelbolzens im verriegelten Zustand den Horizontalriegelbolzen blockiert, ist der Horizontalriegelbolzen gegen unbeabsichtigtes Einfahren mechanisch gesperrt. Bei aktiver Betätigung des Antriebes zum Lösen der Verriegelung (Verstellung vom verriegelten in den entriegelten Zustand) fährt zunächst diese Sicherung frei und nachfolgend wird der Horizontalriegelbolzen durch Entlanggleiten der Lagerfläche an der Betätigungsschräge in den entriegelten Zustand eingezogen. Der Gooseneck-Container kann nun entladen werden.

Verfahrensgemäß zeichnet sich das Containerverriegelungsverfahren dadurch aus, dass bei einem ersten Teil der Hubbewegung des Antriebes ein Leerhub ausgeführt und bei einem zweiten Teil der Hubbewegung der Keilschlitten mitbewegt wird, wobei beim Entriegeln eines Containers/Gooseneck-Containers vom verriegelten Zustand in den entriegelten Zustand während des ersten Teils der Hubbewegung im Leerhub die Sperre gelöst wird und dann während des zweiten Teils der Hubbewegung der Keilschlitten und damit der Horizontalriegelbolzen rückbewegt wird und parallel der Verriegelungsbolzen zunächst angehoben und dann in den entriegelten Zustand rückgedreht wird.

Nachfolgend werden zwei Ausführungsbeispiele der Erfindung anhand der beiliegenden Zeichnungen detailliert beschrieben.

Darin zeigt:
- Fig. 1: eine Containerverriegelungsvorrichtung in einem ersten Ausführungsbeispiel in räumlicher Ansicht im entriegelten Zustand,
- Fig. 2: die Containerverriegelungsvorrichtung gemäß Fig. 1 in räumlicher Ansicht im verriegelten Zustand,
- Fig. 3 a,b: die Containerverriegelungsvorrichtung gemäß Fig. 1 in Aufsicht und im Querschnitt im entriegelten Zustand,
- Fig. 4 a,b: die Containerverriegelungsvorrichtung gemäß Fig. 1 in Aufsicht und im Querschnitt am Beginn des Verriegelungsvorganges,
- Fig. 5 a,b: die Containerverriegelungsvorrichtung gemäß Fig. 1 in Aufsicht und im Querschnitt beim weiteren Verriegelungsvorgang,
- Fig. 6 a,b: die Containerverriegelungsvorrichtung gemäß Fig. 1 in Aufsicht und im Querschnitt beim Erreichen des verriegelten Zustandes und
- Fig. 7 a,b: die Containerverriegelungsvorrichtung gemäß Fig. 1 in Aufsicht und im Querschnitt beim Rückstellen in den entriegelten Zustand.
- Fig. 8: eine Containerverriegelungsvorrichtung in einem zweiten Ausführungsbeispiel in räumlicher Ansicht im entriegelten Zustand,
- Fig. 9: die Containerverriegelungsvorrichtung gemäß Fig. 8 in räumlicher Ansicht im verriegelten Zustand,
- Fig. 10 a,b,c: die Containerverriegelungsvorrichtung gemäß Fig. 8 in Seitenansicht, Aufsicht und im Querschnitt im entriegelten Zustand,
- Fig. 11 a,b,c: die Containerverriegelungsvorrichtung gemäß Fig. 8 in Seitenansicht, Aufsicht und im Querschnitt am Beginn des Verriegelungsvorganges,
- Fig. 12 a,b,c: die Containerverriegelungsvorrichtung gemäß Fig. 8 in Seitenansicht, Aufsicht und im Querschnitt beim Erreichen des verriegelten Zustandes,
- Fig. 13 a,b,c: die Containerverriegelungsvorrichtung gemäß Fig. 8 in Seitenansicht, Aufsicht und im Querschnitt beim Beginn des Rückstellens in den entriegelten Zustand und
- Fig. 14 a,b,c: die Containerverriegelungsvorrichtung gemäß Fig. 8 in Aufsicht und im Querschnitt beim Rückstellen in den entriegelten Zustand.

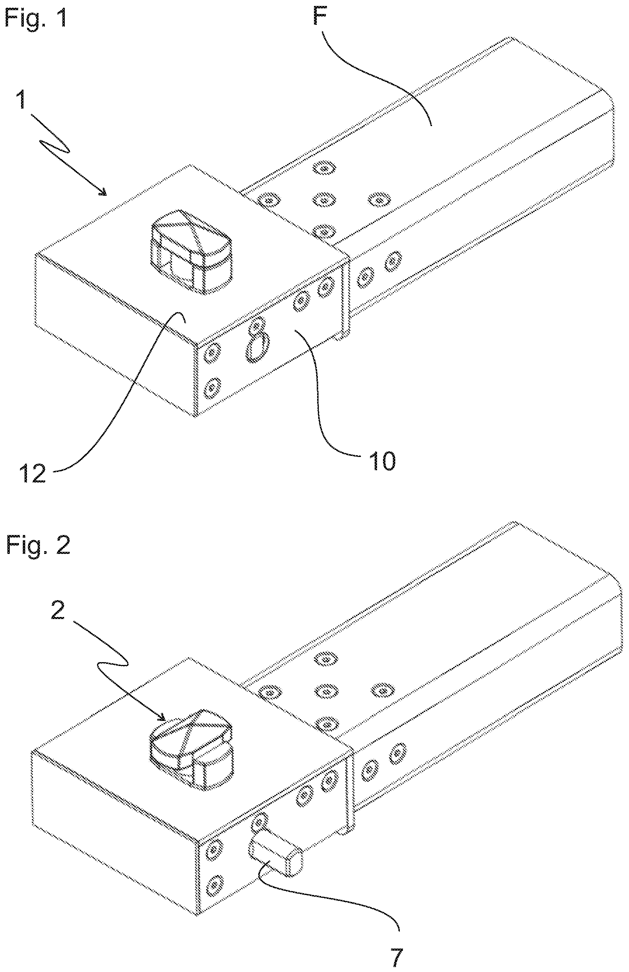

In Fig. 1 ist in räumlicher Ansicht eine erste Ausführungsform der Containerverriegelungsvorrichtung dargestellt, die an einer Ladefläche eines Fahrzeugs F, insbesondere am Frontende eines Gooseneck-Aufliegers, vorgesehen ist, auf dem ein zu transportierender Container abzusetzen ist. Die Verriegelungsvorrichtung hat ein Verriegelungsgehäuse 1, das einen Antriebskasten 10 sowie ein darauf aufbauendes Führungsbauteil 11 mit Lastauflagefläche 12 aufweist. Das Führungsbauteil 11 überragt die Ladefläche. Dabei passt das nach oben vorstehende Führungsbauteil 11 in einen Eckbeschlag des Containers, womit der Container verrutschungssicher auf der Ladefläche, insbesondere der Lastauflagefläche 12, aufliegt. Wird alternativ ein Gooseneck-Container aufgelastet, wird dieser mit seinen vorderen beiden Eckbeschlägen an jeweils ein dort am Gooseneckauflieger angeordnetem Verriegelungsgehäuse 1 anliegend in etwas tieferer Position aufgeladen. Die Verriegelungsvorrichtung ist in Fig. 1 im entriegelten Zustand, bereit zum Aufladen oder Abladen eines (Gooseneck-)Containers, und in Fig. 2 im verriegelten Zustand, bei dem der (Gooseneck-)Container mit der Ladefläche des Fahrzeugs (Gooseneckaufliegers) form- und kraftschlüssig verriegelt ist, dargestellt.

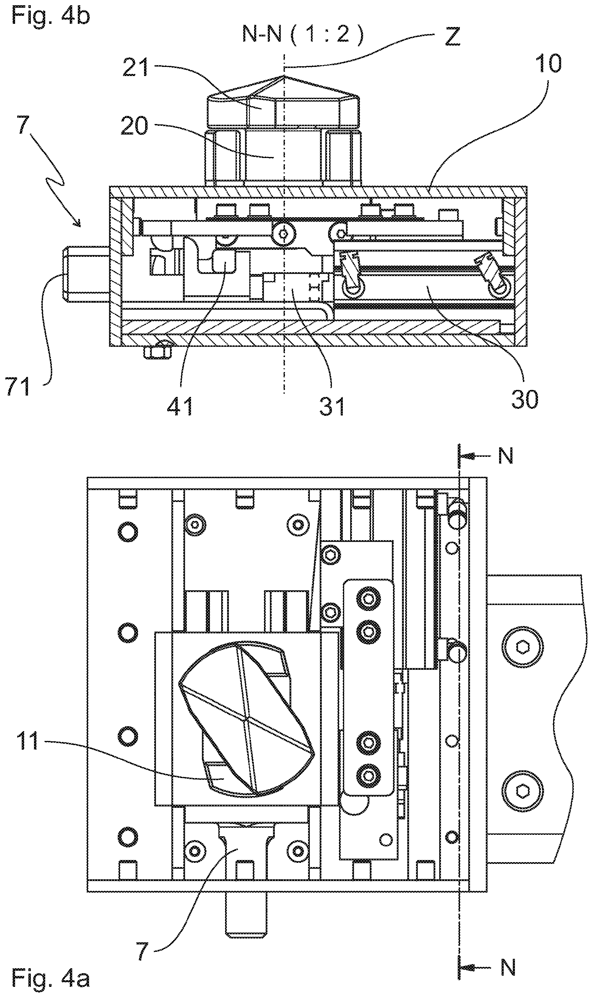

Zur Verriegelung des aufgeladenen Containers ist ein Verriegelungsbolzen 2 vorgesehen, der in einer zentralen und vertikalen Achse Z (siehe Fig. 4b) in dem Führungsbauteil 11 axial verschiebbar und drehbar gelagert ist. Der Verriegelungsbolzen 2 weist einen zylindrischen Schaft 20 auf, der im Verriegelungsgehäuse 1 axial verschiebbar und drehbar gelagert und gehaltert ist. Ferner weist der Verriegelungsbolzen 2 am oberen Ende des Schaftes 20 einen Verriegelungskopf 21 auf, der eine pilzartige, aber elliptische Kontur aufweist und in einem entriegeltem Zustand deckungsgleich auf dem Führungsbauteil 11 aufliegt und in einen verriegelten Zustand verstellbar ist, bei dem der Verriegelungskopf 21 um 90 ° verdreht und abgesenkt ist, sodass die nun vom elliptischen Verriegelungskopf 21 über das Führungsbauteil 11 vorstehenden Vorsprünge den Eckbeschlag des aufgeladenen Containers hintergreifen.

Zur Verriegelung eines seitlich an das Verriegelungsgehäuse 1 anliegend in tieferer Position aufgeladenen Gooseneck-Containers ist ein Horizontalriegelbolzen 7 vorgesehen, der in horizontaler Bewegungsrichtung von einer rückgezogenen Stellung im entriegelten Zustand (Fig. 1), bei der der Horizontalriegelbolzen 7 nicht über das Verriegelungsgehäuse 1 übersteht, in eine vorgezogene Stellung im verriegelten Zustand, bei der Horizontalriegelbolzen 7 mit einem freien Ende 71 über das Verriegelungsgehäuse 1 übersteht und dort seitlich in eine Öffnung des Eckbeschlages des Gooseneck-Containers eingreift.

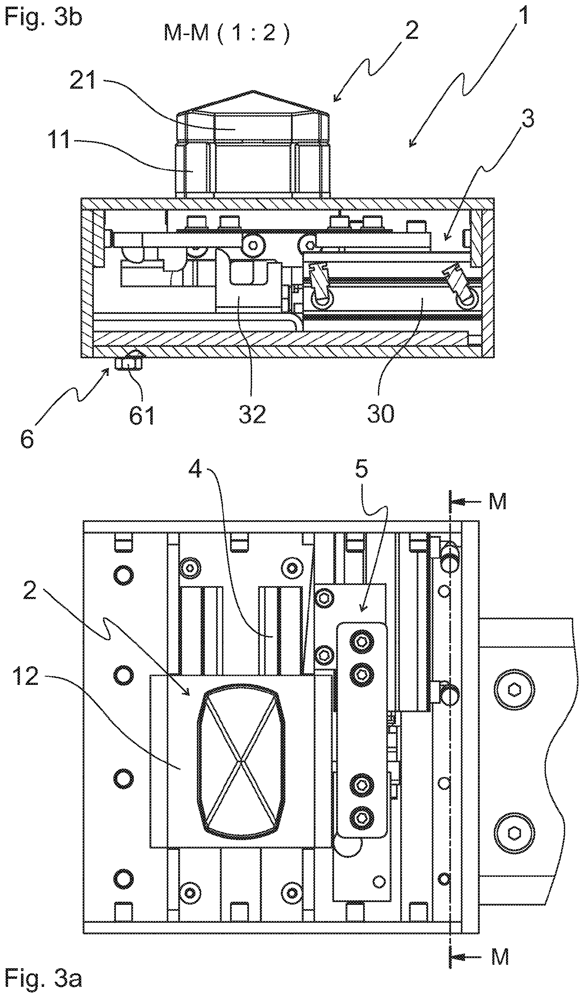

Die genaue Arbeitsweise und die dafür erforderlichen Bauteile der Containerverriegelungsvorrichtung sind in den Fig. 3 bis 7 in jeweils einer Aufsicht auf die Containerverriegelungsvorrichtung (jeweils zu der Teilfigur a) und einem Querschnitt (jeweils zur Teilfigur b) wiedergegeben.

In Fig. 3 ist die Containerverriegelungsvorrichtung in ihrem entriegelten Zustand, in dem ein Container entladen bzw. aufgeladen werden kann, dargestellt. Dies ist daran erkennbar, dass der Verriegelungsbolzen 2 mit seinem Schaft 20 in erhöhter Position, also axial nach oben verschoben ist und der zum Verriegelungsbolzen 2 gehörende Verriegelungskopf 21 auf dem Führungsbauteil 11 aufliegt, wie insbesondere aus Fig. 3b zu entnehmen ist. Entsprechend kann ein Container mit seinem Eckbeschlag und seiner darin ausgebildeten langlochartigen Öffnung über den Verriegelungskopf 21 und das Führungsbauteil 11 auf die Ladefläche und insbesondere auf die Lastauflagefläche 12 aufgeladen werden bzw. von der aufgeladenen Position angehoben werden, da der Verriegelungskopf 21 mit dem Führungsbauteil 11 fluchtet (siehe Aufsicht Fig. 3a). Ferner befindet sich der Horizontalriegelbolzen 7 in seiner rückgezogenen Stellung, bei der der Horizontalriegelbolzen 7 nicht über das Verriegelungsgehäuse 1 übersteht.

Ferner ist in Fig. 3a in Aufsicht der Antrieb 3 in Form eines doppelt wirkenden Pneumatikzylinders 30 zu sehen, der im Antriebskasten 10 des Verriegelungsgehäuses 1 angeordnet ist. Der doppelt wirkende Pneumatikzylinder 30 hat eine Kolbenstange 31, die über eine Antriebsklaue 32 auf einen im Antriebskasten 10 parallel zum Pneumatikzylinder 30 hin- und herbewegbaren Keilschlitten 4 über einen Mitnehmer 41 zusammenwirkt. Hinsichtlich der Ausbildung des Keilschlittens 4 und seiner Wirkverbindung auf den Verriegelungsbolzen 2 wird auf die noch nicht veröffentlichte DE 10 2021 112 894 des gleichen Anmelders verwiesen, wie die erforderliche Drehbewegung des Schaftes 20 und damit des Verriegelungskopfes 21 sowie das Absenken bzw. Wiederanheben verwirklicht werden.

Bei Betätigung des Pneumatikzylinders 30 und somit Verstellung der Verriegelungsvorrichtung vom entriegelten Zustand in den verriegelten Zustand bewegt sich die Kolbenstangen 31 mit der Antriebsklaue 32 zunächst von der in Fig. 3b dargestellten Stellung in Zeichenebene nach links, wie im Vergleich mit Fig. 4b ersichtlich ist. Dabei wird der Mitnehmer 41 durch die Antriebsklaue 32 mitgenommen, womit sich der mit dem Mitnehmer 41 verbundene Keilschlitten 4 ebenfalls in Zeichenebene gemäß Fig. 4b nach links oder in Zeichenebene gemäß Fig. 4a nach unten bewegt. Da an dem Keilschlitten 4 direkt in Verlängerung seiner horizontalen Bewegungsrichtung der Horizontalriegelbolzen 7 angesetzt ist, bewegt sich dieser ebenfalls in dieser horizontalen Bewegungsrichtung und steht, wie aus den Fig. 4a und 4b ersichtlich, bereits ein Stück über das Verriegelungsgehäuse 1 hervor. Parallel dazu verdreht sich der Schaft 20 des Verriegelungsbolzens 2 und beginnt somit ebenfalls sich in Richtung zum verriegelten Zustand zu bewegen.

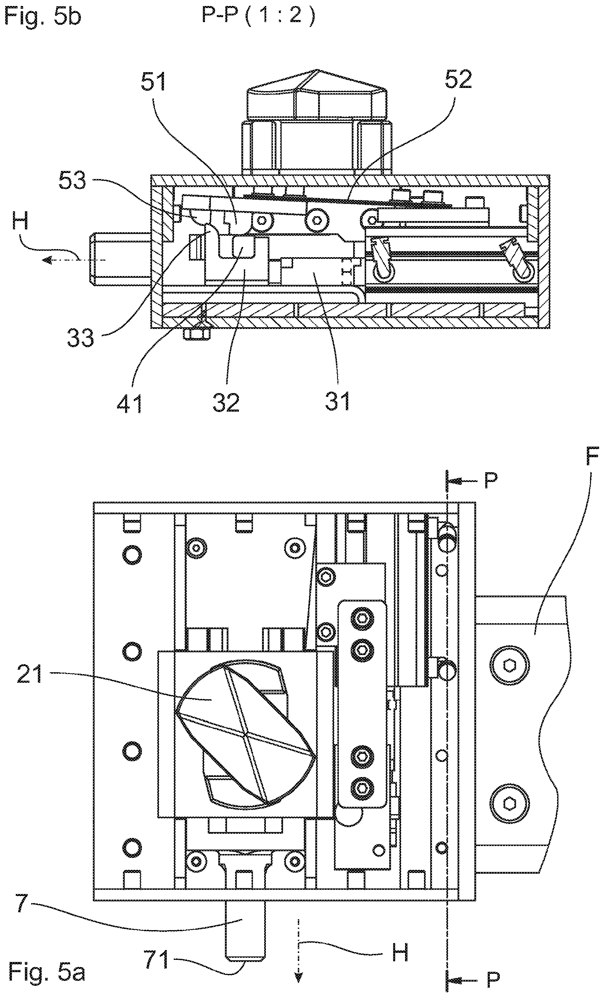

In Fig. 5 ist der weitere Bewegungsablauf in Richtung auf den verriegelten Zustand hin dargestellt, wobei die Kolbenstange 31 des Pneumatikzylinders 30 noch weiter ausgefahren ist und mithin über die Antriebsklaue 32 und den Mitnehmer 41 der Keilschlitten 4 noch weiter in horizontaler Bewegungsrichtung H (in Fig. 5a nach unten) bewegt worden ist. Entsprechend steht das freie Ende 71 des Horizontalriegelbolzens 7 noch weiter vor und parallel ist der Verriegelungskopf 21 noch weiter nach links verdreht (siehe Fig. 5a im Vergleich zu Fig. 4a).

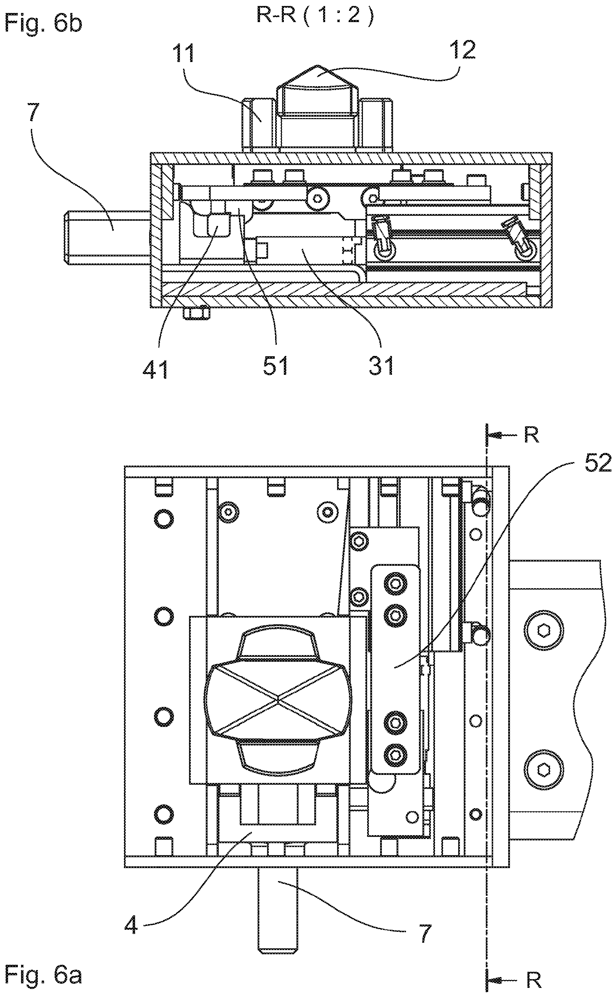

In Fig. 6 ist dann der verriegelte Zustand erreicht, bei dem der Verriegelungskopf 21 nunmehr um 90 ° verdreht und zwischen dem Führungsbauteil 11 abgesenkt ist (siehe Fig. 6a und 6b). Parallel dazu ist der Horizontalriegelbolzen 7 mit seinem freien Ende 71 ebenfalls weit vorstehend in seinem verriegelten Zustand zu sehen. In diesem verriegelten Zustand kann das freie Ende 71 des Horizontalriegelbolzens 7 seitlich in einen Eckbeschlag eines Gooseneck-Containers eingreifen und ihn somit sicher fixieren.

Ferner wird auf eine Sperreinrichtung 5 hingewiesen, die im Antriebskasten 10 des Verriegelungsgehäuses 1 angeordnet ist und eine Sperre 51 aufweist, die über eine Blattfeder 52 Kraft beaufschlagt an der Antriebsklaue 32 bzw. dem Mitnehmer 41 anliegt, sodass sie bei Erreichen der Endstellung im verriegelten Zustand (Fig. 6b) in den Laufweg des Keilschlittens 4, nämlich hinter den Mitnehmer 41 eingreift und dort eine formschlüssige Sperre gegen ein unerwünschtes Lösen (Rückstellung) der Verriegelung bildet.

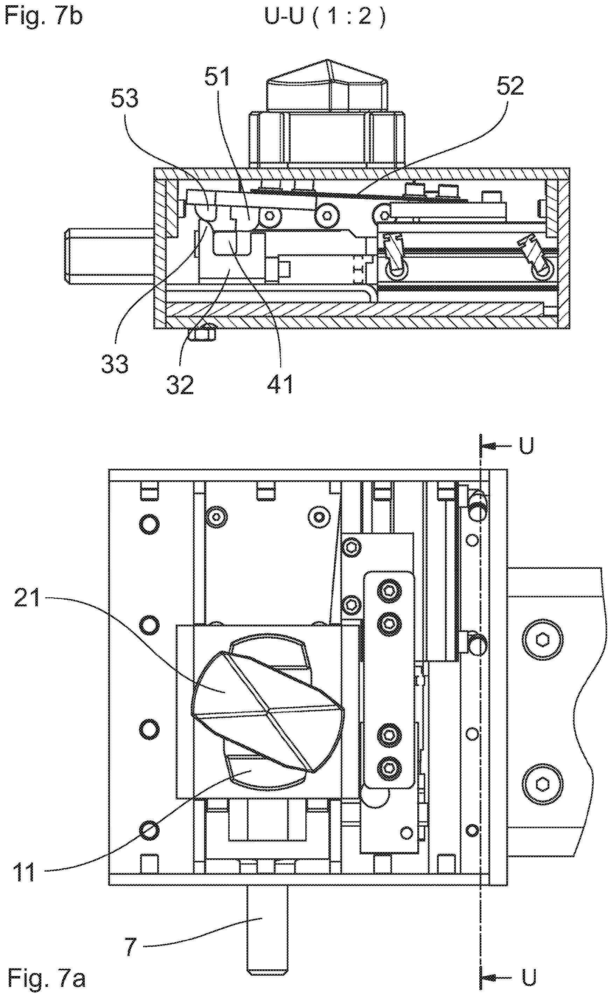

Zum Lösen der Containerverriegelung vom verriegelten Zustand zurück in den entriegelten Zustand wird ausgehend von Fig. 6 (verriegelter Zustand) der doppelt wirkende Pneumatikzylinder 30 zum Einziehen der Kolbenstange 31 aktiviert, womit zunächst ein kurzer Leerhub der Kolbenstange 31 erfolgt, bei dem die Antriebsklaue 32 von ihrer den Mitnehmer 41 in Zeichenebene von Fig. 5b nach links schiebenden Schubposition in die den Mitnehmer 41 in Zeichenebene von Fig. 7b nach rechts ziehenden Zugposition verstellt wird und mit einem Auslösevorsprung 33 an der Antriebsklaue 32 mit einem Verdrängungsbauteil 53 der Sperreinrichtung 5 in Berührung gelangt.

Bei der weiteren Bewegung, nämlich dem weiteren Einziehen der Kolbenstange 31 in den Pneumatikzylinder 30 wird mit dem Auslösevorsprung 33 an der Antriebsklaue 32 über das Verdrängungsbauteil 53 der Sperreinrichtung 5 die Sperre 51 gegen die Kraft der Blattfeder 52 aus der Bewegungsbahn des Mitnehmers 41 (in Zeichenebene der Fig. 6b und 7b nach oben) gedrängt, womit der Mitnehmer 41 und somit der Keilschlitten 4 im Antriebskasten 10 freigegeben ist und der Mitnehmer 41 ein Zurückschnellen der von der Blattfeder 52 belasteten Sperre 51 unterbindet. Dabei wird der Verriegelungsbolzen 2 vollständig in axialer Richtung angehoben, sodass die Vorsprünge des Verriegelungskopfes 21 oberhalb des Führungsbauteils 11 liegen (Fig. 7b) und nunmehr die Rückdrehung des Verriegelungskopfes 21 erfolgt, wie auch aus dem Vergleich der Fig. 6b mit 7b zu entnehmen ist, bei der der Verriegelungsbolzen 2 angehoben und bereits leicht rückgedreht ist.

Durch die Rückbewegung des Keilschlittens 4 wird somit auch der Horizontalriegelbolzen 7 eingezogen, so dass sich dann wieder der entriegelte Zustand gemäß Fig. 3 einstellt. Entsprechend dreht sich der Verriegelungsbolzen 2 so in seinen entriegelten Zustand zurück, dass der Verriegelungskopf 21 fluchtend über dem Führungsbauteil 11 liegt, wie dies in Fig. 3a in der Aufsicht dargestellt ist (entriegelter Zustand).

Ferner kann an der Containerverriegelungsvorrichtung eine Notentriegelung 6 (in den Figuren 3b bis 7b nur durch Schraube 61 angedeutet) angeordnet sein, wobei die Schraube 61 mit der Sperreinrichtung 5 zusammenwirkt, sodass bei Einschrauben der Schraube 61 die Sperre 51 gegen die Kraft der Blattfeder 52 aus dem lateralen Bewegungsweg des Mitnehmers 41 herausbewegt wird. Nun kann mit einem hier nicht dargestellten Schubelement der nicht mehr gesperrte Keilschlitten 4, bspw. bei Ausfall der Druckluftversorgung oder Beschädigung des Pneumatikzylinders, manuell in seinen entriegelten Zustand gemäß Fig. 3a und b rückgestellt werden.

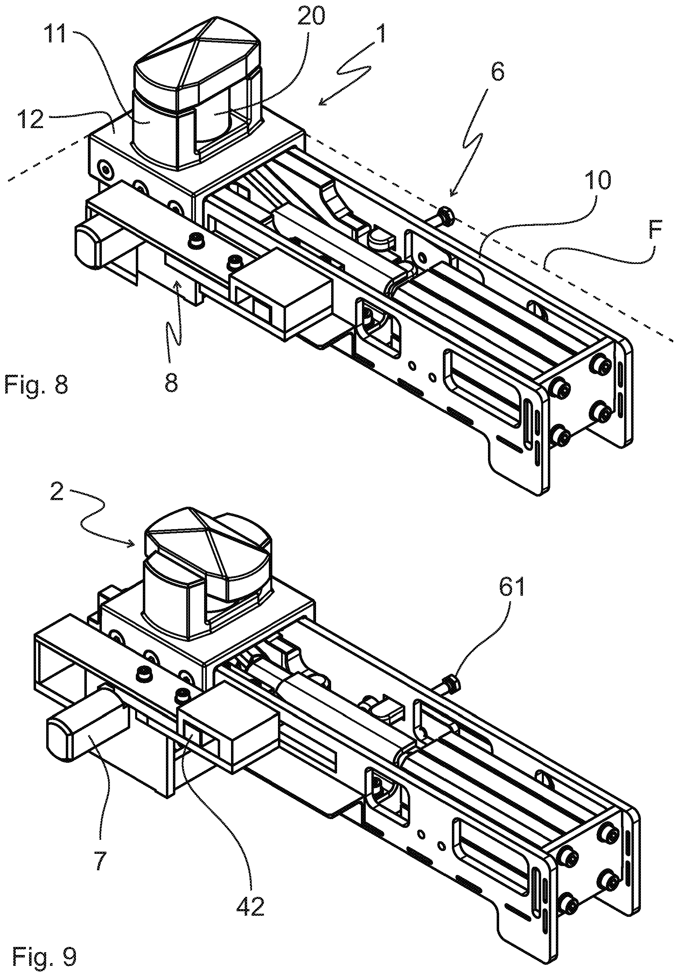

Die in den Figuren 8 bis 14 dargestellte Containerverriegelung in zweiter Ausführungsform ist analog zur ersten ausgebildet, so dass insoweit auf die ersten drei Absätze der Figurenbeschreibung zur ersten Ausführungsform verwiesen wird.

Zur Verriegelung eines seitlich an das Verriegelungsgehäuse 1 anliegend in tieferer Position aufgeladenen Gooseneck-Containers ist ein Horizontalriegelbolzen 7 vorgesehen, der in erster horizontaler Bewegungsrichtung von einer rückgezogenen Stellung im entriegelten Zustand (Fig. 8), bei der der Horizontalriegelbolzen 7 im Wesentlichen nicht über das Verriegelungsgehäuse 1 übersteht, in eine vorgezogene Stellung im verriegelten Zustand (Fig. 9), bei der der Horizontalriegelbolzen 7 mit einem freien Ende 71 deutlich über das Verriegelungsgehäuse 1 übersteht und dort seitlich in eine Öffnung des Eckbeschlages des Gooseneck-Containers eingreift.

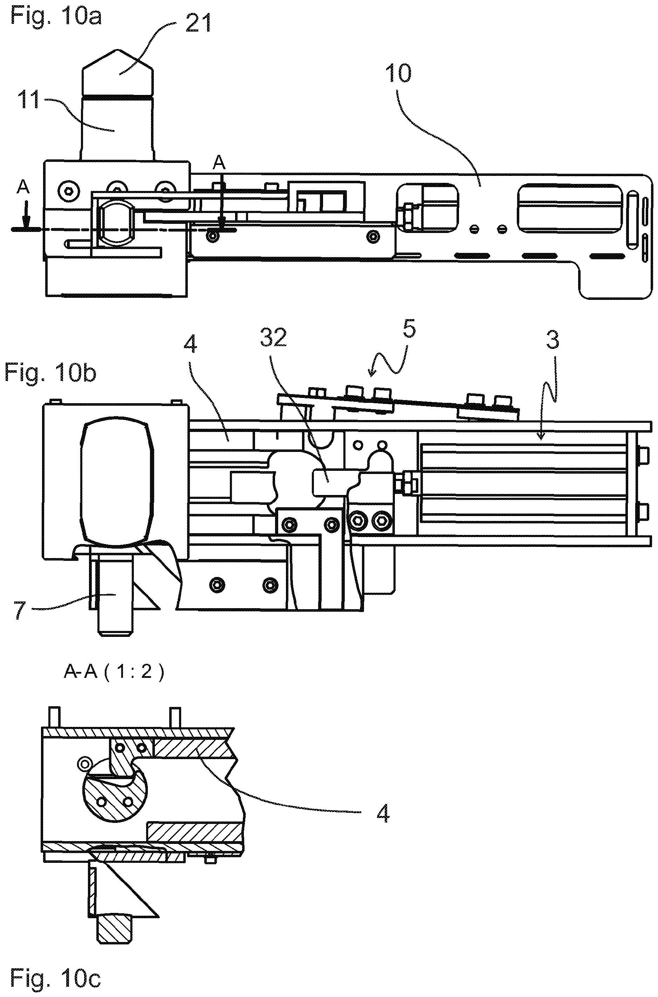

Die genaue Arbeitsweise und die dafür erforderlichen Bauteile der Containerverriegelungsvorrichtung sind in den Fig. 10 bis 14 in jeweils einer Seitenansicht (jeweils zu der Teilfigur a), einer Aufsicht (jeweils zu der Teilfigur b) auf die Containerverriegelungsvorrichtung und einem Querschnitt (jeweils zur Teilfigur c) wiedergegeben.

In Fig. 10 ist die Containerverriegelungsvorrichtung in ihrem entriegelten Zustand, in dem ein Container entladen bzw. aufgeladen werden kann, dargestellt. Dies ist daran erkennbar, dass der Verriegelungsbolzen 2 mit seinem Schaft 20 in erhöhter Position, also axial nach oben verschoben ist und der zum Verriegelungsbolzen 2 gehörende Verriegelungskopf 21 auf dem Führungsbauteil 11 aufliegt, wie insbesondere aus Fig. 10a zu entnehmen ist. Entsprechend kann ein Container mit seinem Eckbeschlag und seiner darin ausgebildeten langlochartigen Öffnung über den Verriegelungskopf 21 und das Führungsbauteil 11 auf die Ladefläche und insbesondere auf die Lastauflagefläche 12 aufgeladen werden bzw. von der aufgeladenen Position angehoben werden, da der Verriegelungskopf 21 mit dem Führungsbauteil 11 fluchtet (siehe Aufsicht Fig. 10b). Ferner befindet sich der Horizontalriegelbolzen 7 in seiner rückgezogenen Stellung, bei der der Horizontalriegelbolzen 7 nicht wesentlich über das Verriegelungsgehäuse 1 übersteht.

Ferner ist in Fig. 10b in Aufsicht der Antrieb 3 in Form eines doppelt wirkenden Pneumatikzylinders 30 zu sehen, der im Antriebskasten 10 des Verriegelungsgehäuses 1 angeordnet ist. Der doppelt wirkende Pneumatikzylinder 30 hat eine Kolbenstange 31, die über eine Antriebsklaue 32 auf einen im Antriebskasten 10 parallel zum Pneumatikzylinder 30 hin- und herbewegbaren Keilschlitten 4 über einen ersten Mitnehmer 41 zusammenwirkt. Hinsichtlich der Ausbildung des Keilschlittens 4 und seiner Wirkverbindung auf den Verriegelungsbolzen 2 wird auf die noch nicht veröffentlichte DE 10 2021 112 894 des gleichen Anmelders verwiesen. Wie die erforderliche Drehbewegung des Schaftes 20 und damit des Verriegelungskopfes 21 verwirklicht wird, ist aus der Schnittdarstellung Fig. 10c ersichtlich.

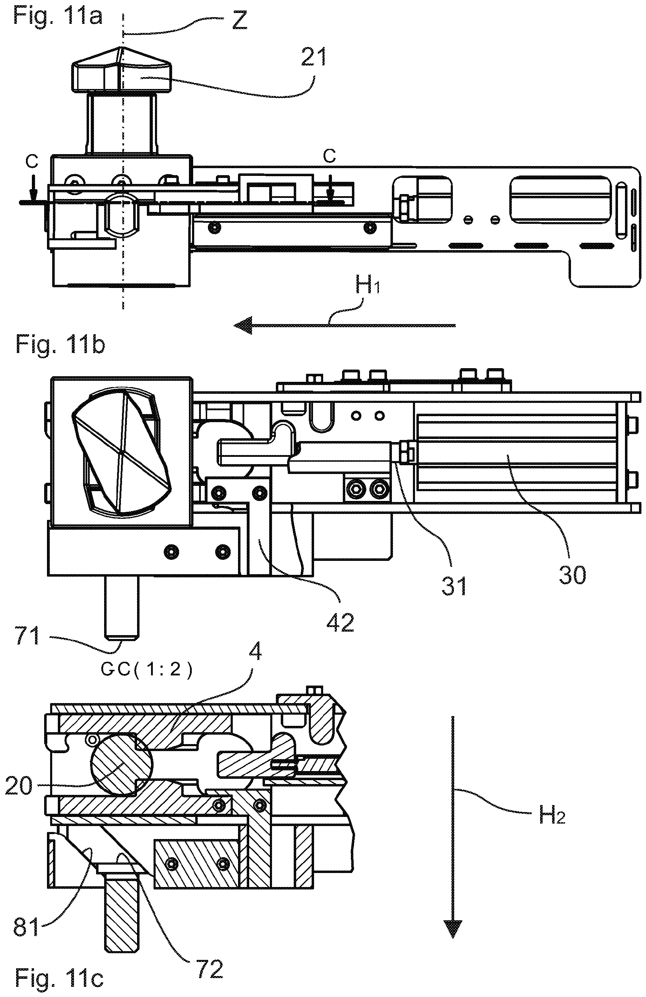

Bei Betätigung des Pneumatikzylinders 30 und somit Verstellung der Verriegelungsvorrichtung vom entriegelten Zustand in den verriegelten Zustand bewegt sich die Kolbenstangen 31 mit der Antriebsklaue 32 zunächst von der in Fig. 10b dargestellten Stellung in Zeichenebene nach links, wie im Vergleich mit Fig. 10b ersichtlich ist. Dabei wird der erste Mitnehmer 41 durch die Antriebsklaue 32 mitgenommen, womit sich der mit dem ersten Mitnehmer 41 verbundene Keilschlitten 4 ebenfalls in Zeichenebene gemäß Fig. 10b nach links bewegt. Am Keilschlitten 4 ist ein zweiter Mitnehmer 42 angeformt bzw. befestigt, der einen Keilschieber 8 am Verriegelungsgehäuse 1 in gleicher erster horizontaler Bewegungsrichtung (H₁), also in Fig. 10b und 11b nach links bewegt. Eine am Keilschieber (8) ausgebildete Betätigungsschräge (81) wirkt mit einer Lagerfläche (72) am Horizontalriegelbolzen 7 zusammen, womit sich dieser in einer zweiten horizontalen Bewegungsrichtung (H₂) 90° zur ersten horizontalen Bewegungsrichtung (H₁) bewegt und, wie aus Fig. 11b ersichtlich, bereits deutlich über das Verriegelungsgehäuse 1 hervorsteht. Parallel dazu verdreht sich der Schaft 20 des Verriegelungsbolzens 2 und beginnt somit ebenfalls sich in Richtung zum verriegelten Zustand zu bewegen.

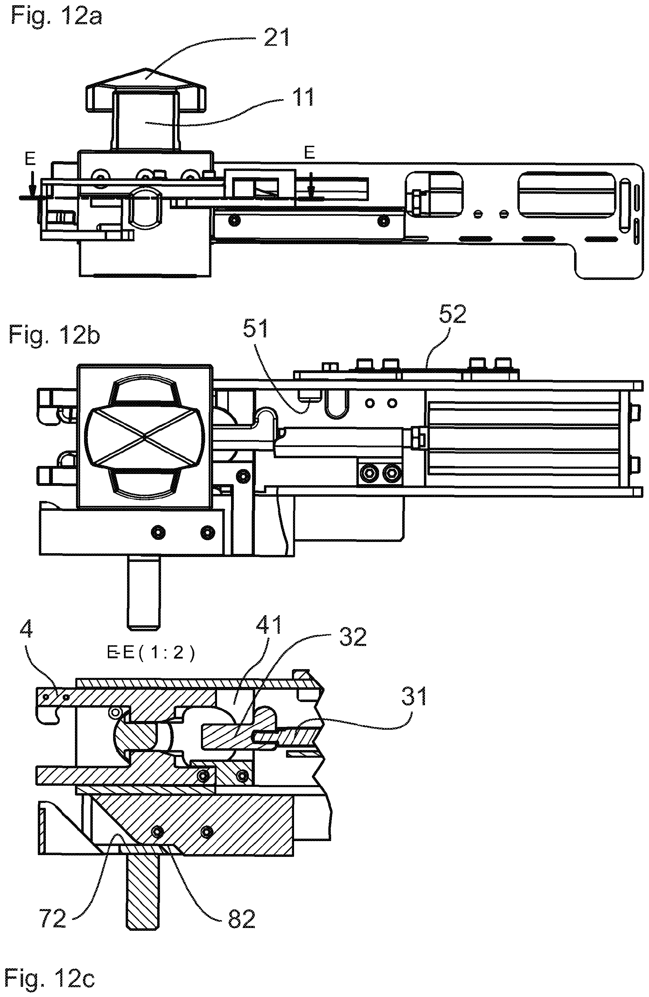

In Fig. 12 ist dann der verriegelte Zustand erreicht, bei dem der Verriegelungskopf 21 nunmehr um 90 ° verdreht und zwischen dem Führungsbauteil 11 abgesenkt ist (siehe Fig. 12a und 12b). Parallel dazu ist der Horizontalriegelbolzen 7 mit seinem freien Ende 71 ebenfalls weit vorstehend in seinem verriegelten Zustand zu sehen. Bei Erreichen des verriegelten Zustands rutscht durch das Ausfahren, nämlich Bewegen des Keilschlittens (4) und damit parallel des Keilschiebers (8) in Zeichenebene gemäß Fig. 12 ganz nach links, die Lagerfläche (72) des Horizontalriegelbolzens 7 entlang der Betätigungsschräge (81) des Keilschiebers (8) bis an deren äußeren Rand, bis die Lagerfläche (72) des Horizontalriegelbolzens 7 an der Auflagefläche (82) der Betätigungsschräge (81) anliegt (siehe Fig. 12c). In diesem verriegelten Zustand kann das freie Ende 71 des Horizontalriegelbolzens 7 seitlich in einen Eckbeschlag eines Gooseneck-Containers eingreifen und ihn somit sicher fixieren, da der Horizontalriegelbolzen 7 durch die formschlüssige Anlage der Lagerfläche (72) des Horizontalriegelbolzens 7 an der Auflagefläche (82) gegen ein unbeabsichtigtes Einfahren entgegen der zweiten horizontalen Bewegungsrichtung (H₂) gesichert ist.

Ferner wird auf eine Sperreinrichtung 5 hingewiesen, die im Antriebskasten 10 des Verriegelungsgehäuses 1 angeordnet ist und eine Sperre 51 aufweist, die über eine Blattfeder 52 Kraft beaufschlagt an der Antriebsklaue 32 bzw. dem Mitnehmer 41 anliegt, sodass sie bei Erreichen der Endstellung im verriegelten Zustand (Fig. 12b) in den Laufweg des Keilschlittens 4, nämlich hinter den Mitnehmer 41 eingreift und dort eine formschlüssige Sperre gegen ein unerwünschtes Lösen (Rückstellung) der Verriegelung bildet.

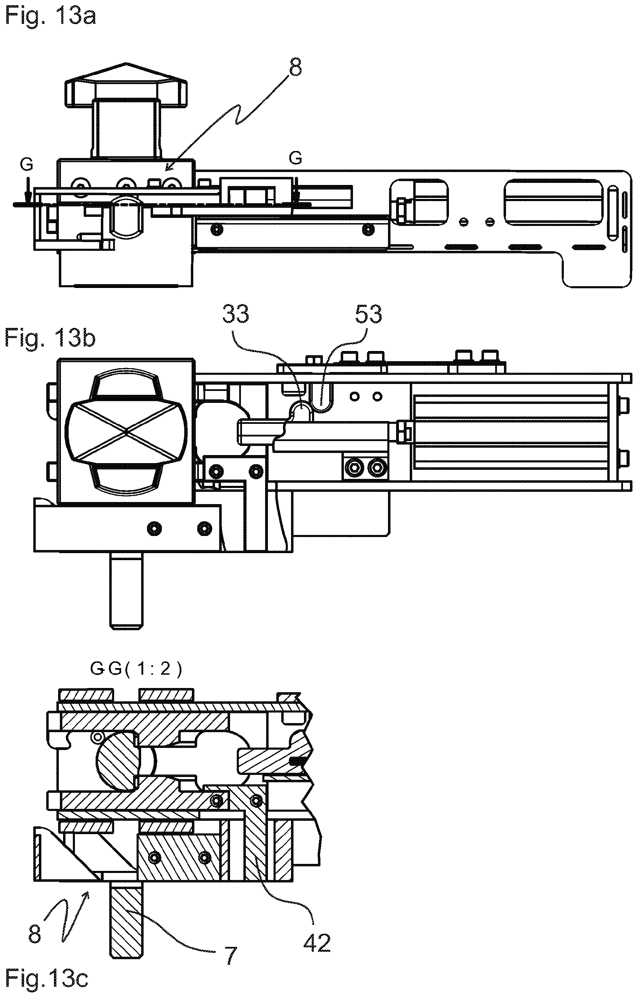

Zum Lösen der Containerverriegelung vom verriegelten Zustand zurück in den entriegelten Zustand wird ausgehend von Fig. 12 (verriegelter Zustand) der doppelt wirkende Pneumatikzylinder 30 zum Einziehen der Kolbenstange 31 aktiviert, womit zunächst ein kurzer erster Leerhub der Kolbenstange 31 erfolgt, bei dem die Antriebsklaue 32 von ihrer den ersten Mitnehmer 41 in Zeichenebene von Fig. 11b nach links schiebenden Schubposition in die den ersten Mitnehmer 41 in Zeichenebene von Fig. 13b nach rechts ziehenden Zugposition verstellt wird und mit einem Auslösevorsprung 33 an der Antriebsklaue 32 mit einem Verdrängungsbauteil 53 der Sperreinrichtung 5 in Berührung gelangt. Parallel wird ein zweiter Leerhub zwischen dem zweiten Mitnehmer (42) und dem Keilschieber (8) ausgeführt, sodass die Rückbewegung des Keilschiebers (8) in Fig. 13c entgegen der ersten horizontalen Bewegungsrichtung (H₁) gerade beginnt und die formschlüssige Anlage der Lagerfläche (72) des Horizontalriegelbolzens 7 an der Auflagefläche (82) gelöst wird.

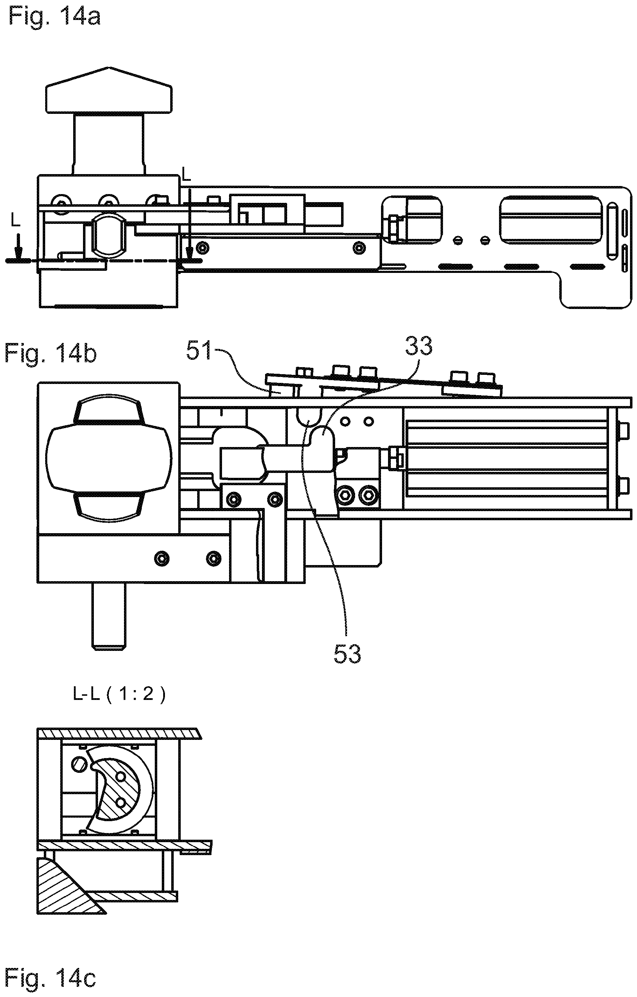

Bei der weiteren Bewegung, nämlich dem weiteren Einziehen der Kolbenstange 31 in den Pneumatikzylinder 30 wird mit dem Auslösevorsprung 33 an der Antriebsklaue 32 über das Verdrängungsbauteil 53 der Sperreinrichtung 5 die Sperre 51 gegen die Kraft der Blattfeder 52 aus der Bewegungsbahn des ersten Mitnehmers 41 (in Zeichenebene der Fig. 13b und 14b nach oben) gedrängt, womit der erste Mitnehmer 41 und somit der Keilschlitten 4 im Antriebskasten 10 freigegeben ist und der erste Mitnehmer 41 ein Zurückschnellen der von der Blattfeder 52 belasteten Sperre 51 unterbindet. Dabei wird der Verriegelungsbolzen 2 vollständig in axialer Richtung angehoben, sodass die Vorsprünge des Verriegelungskopfes 21 oberhalb des Führungsbauteils 11 liegen (Fig. 14a) und anschließend die Rückdrehung des Verriegelungskopfes 21 erfolgen kann.

Durch die Rückbewegung des Keilschlittens 4 wird dann mit der parallelen Rückbewegung des Keilschiebers (8) über die Betätigungsschräge (81) des Keilschiebers (8) auch der Horizontalriegelbolzen 7 eingezogen, so dass sich dann wieder der entriegelte Zustand gemäß Fig. 10 einstellt. Entsprechend dreht sich der Verriegelungsbolzen 2 so in seinen entriegelten Zustand zurück, dass der Verriegelungskopf 21 fluchtend über dem Führungsbauteil 11 liegt, wie dies in Fig. 10b in der Aufsicht dargestellt ist (entriegelter Zustand).

### Bezugszeichenliste

- 1: Verriegelungsgehäuse
- 10: Antriebskasten
- 11: Führungsbauteil
- 12: Lastauflagefläche

- 2: Verriegelungsbolzen
- 20: Schaft
- 21: Verriegelungskopf

- 3: Antrieb
- 30: Pneumatikzylinder
- 31: Kolbenstange
- 32: Antriebsklaue
- 33: Auslösevorsprung

- 4: Keilschlitten
- 41: erster Mitnehmer
- 42: zweiter Mitnehmer

- 5: Sperreinrichtung
- 51: Sperre
- 52: Blattfeder
- 53: Verdrängungsbauteil

- 6: Notentriegelung
- 61: Schraube

- 7: Horizontalriegelbolzen
- 71: freies Ende
- 72: Lagerfläche
- 8: Keilschieber
- 81: Betätigungsschräge
- 82: Anlagefläche

- F: Fahrzeug
- H: horizontale Bewegungsrichtung
- H₁: erste horizontale Bewegungsrichtung
- H₂: zweite horizontale Bewegungsrichtung
- Z: Achse

## Patentansprüche

1. Containerverriegelungsvorrichtung auf einem Fahrzeug (F), zur Verriegelung eines auf einer Ladefläche des Fahrzeugs zu transportierenden Containers mit einem Eckbeschlag, aufweisend ein Verriegelungsgehäuse (1), einen Verriegelungsbolzen (2) und einen Antrieb (3), wobei
- der Verriegelungsbolzen (2) einen Schaft (20) und einen Verriegelungskopf (21) hat, der in entriegeltem Zustand über eine Öffnung des Eckbeschlags des Containers einführbar und in verriegeltem Zustand den Container über die Öffnung des Eckbeschlages hintergreifende Vorsprünge sichert,
- der Verriegelungsbolzen (2) mit seinem Schaft (20) in dem Verriegelungsgehäuse (1) sowohl axial verschiebbar als auch um seine Achse drehbar gelagert ist,
- ein Keilschlitten (4) im Verriegelungsgehäuse (1) lateral, also senkrecht zur Achse des Verriegelungsbolzens (2), hin- und herbewegbar gelagert und von dem Antrieb (3) antreibbar ist, und
- der Keilschlitten (4) eine Auflaufschräge aufweist, die mit dem Verriegelungsbolzen (2) während der Lateralbewegung des Keilschlittens (4) in Eingriff steht und dem Verriegelungsbolzen (2) eine axiale Bewegung und eine Drehbewegung um 90° erteilt,
**dadurch gekennzeichnet, dass**
- ein Horizontalriegelbolzen (7) im Verriegelungsgehäuse (1) axial und horizontal verschiebbar gelagert ist, wobei ein Gooseneck-Container im Beladungszustand auf dem Fahrzeug mit seinem Eckbeschlag horizontal neben und anliegend dem Verriegelungsgehäuse angeordnet ist,
- der Horizontalriegelbolzen (7) ein freies Ende (71) hat, das in entriegeltem Zustand seitlich nicht über das Verriegelungsgehäuse vorsteht und im verriegeltem Zustand in eine seitliche Öffnung des Eckbeschlags des Gooseneck-Containers eingreift und den Gooseneck-Container über die Öffnung sichert, und
- der Keilschlitten (4) entweder
a) in horizontaler Bewegungsrichtung des Horizontalriegelbolzens (7) hin- und herbewegbar gelagert und mit dem Horizontalriegelbolzen (7) verbunden ist oder
b) in horizontaler Ebene senkrecht zur Bewegungsrichtung des Horizontalriegelbolzens (7) hin- und herbewegbar gelagert und der Horizontalriegelbolzen (7) über einen Keilschieber (8) mit dem Keilschlitten (4) wirkverbunden ist.

2. Containerverriegelungsvorrichtung nach Anspruch 1, **dadurch gekennzeichnet, dass** der Antrieb (3) einen doppelt wirkenden Pneumatikzylinder (30) mit einer lateral bewegbaren Kolbenstange (31) aufweist, wobei die Kolbenstange (31) mit dem Keilschlitten (4) so wirkverbunden ist, dass beim ersten Teil der Hubbewegung des Antriebes (3) ein erster Leerhub und beim zweiten Teil der Hubbewegung die Lateralbewegung des Keilschlittens (4) erfolgen.

3. Containerverriegelungsvorrichtung nach Anspruch 2, **dadurch gekennzeichnet, dass** eine Sperreinrichtung am Verriegelungsgehäuse (1) angeordnet ist, die eine mit Federkraft beaufschlagte Sperre (51) aufweist, die in den lateralen Bewegungsweg des Keilschlittens (4) eingreifbar ausgebildet ist.

4. Containerverriegelungsvorrichtung nach Anspruch 3, **dadurch gekennzeichnet, dass** die Sperreinrichtung (5) einen Lösemechanismus für die Sperre (51) aufweist, der beim ersten Leerhub die Sperre (51) löst.

5. Containerverriegelungsvorrichtung nach einem der vorangehenden Ansprüche, **dadurch gekennzeichnet, dass** eine Notentriegelung (6) vorgesehen ist, mit der die formschlüssige Sperre (51) der Sperreinrichtung (5) entriegelbar ist.

6. Containerverriegelungsvorrichtung nach Anspruch 5, **dadurch gekennzeichnet, dass** die Notentriegelung (6) zwei mit Außengewinde ausgestattete Schubelemente (61) aufweist, bei dem das erste Schubelement (61) in eine erste Gewindebohrung (54) in der Sperreinrichtung (5) und das zweite Schubelement in eine zweite Gewindebohrung im Verriegelungsgehäuse (1) einschraubbar ist, wobei das erste Schubelement (61) die Sperre freigibt und das zweite Schubelement den Keilschlitten (4) zur Öffnung der Verriegelung verschiebt.

7. Containerverriegelungsvorrichtung nach Anspruch 1 mit alternativem Merkmal b) und einem der vorangehenden Ansprüche, **dadurch gekennzeichnet, dass** der Keilschlitten (8) einen zweiten Mitnehmer (42) aufweist, der in den Keilschieber (8) eingreift, wobei der Keilschieber (8) eine Betätigungsschräge (81) hat, die mit einer Lagerfläche (72) des Horizontalriegelbolzens (7) zur axialen Bewegung des Horizontalriegelbolzens (7) zusammenwirkt.

8. Containerverriegelungsvorrichtung nach Anspruch 7, **dadurch gekennzeichnet, dass** zwischen zweitem Mitnehmer (42) und Keilschieber (8) ein zweiter Leerhub ausgebildet ist, der bei Betätigung des Keilschlittens (4) den Keilschieber (8) nachgeschleppt mitbewegt, und an der Betätigungsschräge (81) eine senkrecht zur Bewegungsrichtung des Horizontalriegelbolzens (7) angeordnete Anlagefläche (82) vorgesehen ist, die mit der Lagerfläche (72) des Horizontalriegelbolzens (7) im verriegelten Zustand den Horizontalriegelbolzen (7) blockiert.

9. Containerverriegelungsverfahren für eine
Containerverriegelungsvorrichtung auf einem Fahrzeug (F), zur Verriegelung eines auf einer Ladefläche des Fahrzeugs zu transportierenden Containers mit einem Eckbeschlag, aufweisend ein Verriegelungsgehäuse (1), einen Verriegelungsbolzen (2) und einen Antrieb (3), wobei
- der Verriegelungsbolzen (2) einen Schaft (20) und einen Verriegelungskopf (21) hat, der in entriegeltem Zustand über eine Öffnung des Eckbeschlags des Containers eingeführt werden kann und in verriegeltem Zustand den Container über die Öffnung des Eckbeschlages hintergreifende Vorsprünge sichert,
- der Verriegelungsbolzen (2) mit seinem Schaft (20) in dem Verriegelungsgehäuse (1) sowohl axial verschoben als auch um seine Achse gedreht wird,
- ein Keilschlitten (4) im Verriegelungsgehäuse (1) von dem Antrieb (3) lateral, also senkrecht zur Achse des Verriegelungsbolzens (2), hin- und herbewegt werden kann,
- bei der Lateralbewegung des Keilschlittens (4) durch den Antrieb (3) der Keilschlitten (4) den Verriegelungsbolzen (2) beim Verstellen vom entriegelten Zustand in den verriegelten Zustand zunächst um 90° axial dreht und dann axial nach unten in Richtung auf die Ladefläche zu absenkt, und
- bei Erreichen des verriegelten Zustands eine mit Federkraft beaufschlagte Sperre (51) in den lateralen Bewegungsweg des Keilschlittens (4) eingreift und eine Rückstellung des Keilschlittens (4) verhindert wird,
**dadurch gekennzeichnet, dass** gleichzeitig mit der Bewegung des Keilschlittens (4) ein Horizontalriegelbolzen (7) im Verriegelungsgehäuse (1) axial und horizontal verschoben wird, wobei der Horizontalriegelbolzen (7) bei einem alternativ zum eingangs genannten Container geladenen Gooseneck-Container im Beladungszustand auf dem Fahrzeug mit seinem Eckbeschlag horizontal neben und anliegend dem Verriegelungsgehäuse im verriegelten Zustand in den Eckbeschlag des Gooseneck-Containers eingreift und den Gooseneck-Container sichert.

10. Containerverriegelungsverfahren nach Anspruch 9, **dadurch gekennzeichnet, dass** bei einem ersten Teil der Hubbewegung des Antriebes (3) ein Leerhub ausgeführt und bei einem zweiten Teil der Hubbewegung der Keilschlitten (4) mitbewegt wird, wobei beim Entriegeln eines Containers oder Gooseneck-Containers vom verriegelten Zustand in den entriegelten Zustand während des ersten Teils der Hubbewegung im Leerhub die Sperre (51) gelöst und dann während des zweiten Teils der Hubbewegung der Keilschlitten (4) rückbewegt wird, womit der Verriegelungsbolzen (2) zunächst angehoben und dann in den entriegelten Zustand rückgedreht sowie gleichzeitig der Horizontalriegelbolzen (7) eingefahren wird.

## Claims

1. Container locking device on a vehicle (F), for locking a container with a corner fitting to be transported on a loading surface of the vehicle, comprising a locking housing (1), a locking bolt (2) and a drive (3), wherein
- the locking bolt (2) has a shaft (20) and a locking head (21), which in the unlocked state can be inserted via an opening in the corner fitting of the container and in the locked state secures the container via projections engaging behind the opening in the corner fitting,
- the locking bolt (2) is mounted with its shaft (20) both axially displaceable and rotatable about its axis in the locking housing (1),
- a wedge slide (4) is mounted in the locking housing (1) so that it can be moved back and forth laterally, i.e. perpendicular to the axis of the locking bolt (2), and can be driven by the drive (3), and
- the wedge slide (4) has a ramp which engages with the locking bolt (2) during the lateral movement of the wedge slide (4) and gives the locking bolt (2) an axial movement and a rotational movement through 90°,
**characterized in that**
- a horizontal locking bolt (7) is mounted in the locking housing (1) so that it can move axially and horizontally, wherein a gooseneck container in the loaded state is arranged on the vehicle with its corner fitting horizontally adjacent and flush to the locking housing,
- the horizontal locking bolt (7) has a free end (71) which, in the unlocked state, does not protrude laterally beyond the locking housing and, in the locked state, engages in a lateral opening in the corner fitting of the gooseneck container and secures the gooseneck container via the opening, and
- the wedge slide (4) either
a) is mounted so that it can move back and forth in the horizontal direction of movement of the horizontal locking bolt (7) and is connected to the horizontal locking bolt (7),
or
b) is mounted so that it can move back and forth in a horizontal plane perpendicular to the direction of movement of the horizontal locking bolt (7) and the horizontal locking bolt (7) is operatively connected to the wedge slide (4) via a wedge drive (8).

2. Container locking device according to Claim 1, **characterized in that** the drive (3) has a double-acting pneumatic cylinder (30) with a laterally movable piston rod (31), the piston rod (31) being operatively connected to the wedge slide (4) in such a way that the first part of the stroke movement of the drive (3) is a first idle stroke and in the second part of the stroke movement the lateral movement of the wedge slide (4) takes place.

3. Container locking device according to Claim 2, **characterized in that** a safety locking device is arranged on the locking housing (1), which has a spring-loaded lock (51) which is designed to intrude in the lateral movement path of the wedge slide (4).

4. Container locking device according to Claim 3, **characterized in that** the safety locking device (5) has a release mechanism for the lock (51), which releases the lock (51) during the first idle stroke.

5. Container locking device according to one of the preceding Claims, **characterized in that** an emergency release (6) is provided with which the form-fitting lock (51) of the safety locking device (5) can be unlocked.

6. Container locking device according to Claim 5, **characterized in that** the emergency release (6) has two thrust elements (61) equipped with external threads, in which the first thrust element (61) can be screwed into a first threaded hole (54) in the safety locking device (5) and the second thrust element can be screwed in a second threaded hole in the locking housing (1), the first thrust element (61) releasing the safety lock and the second thrust element displacing the wedge slide (4) to open the safety lock.

7. Container locking device according to Claim 1 with alternative feature b) and one of the preceding claims, **characterized in that** the wedge drive (4) has a second driver (42) which engages in the wedge drive (8), the wedge drive (8) having an operating bevel (81), which cooperates with a bearing surface (72) of the horizontal locking bolt (7) for axial movement of the horizontal locking bolt (7).

8. Container locking device according to Claim 7, **characterized in that** a second idle stroke is formed between the second driver (42) and the wedge drive (8), which moves the wedge drive (8) when the wedge slide (4) is actuated, and on the operating bevel (81) there is a contact surface (82) arranged perpendicular to the direction of movement of the horizontal locking bolt (7), which blocks the horizontal locking bolt (7) with the bearing surface (72) of the horizontal locking bolt (7) in the locked state.

9. Container locking method for a container locking device on a vehicle (F), for locking a container with a corner fitting to be transported on a loading surface of the vehicle, comprising a locking housing (1), a locking bolt (2) and a drive (3), wherein
- the locking bolt (2) has a shaft (20) and a locking head (21) which, in the unlocked state, can be the container inserted via an opening in the corner fitting of and, in the locked state, secures the container via projections engaging behind the opening of the corner fitting,
- the locking bolt (2) with its shaft (20) is both axially displaceable in the locking housing (1) and rotatable about its axis,
- a wedge slide (4) in the locking housing (1) can be moved back and forth laterally by the drive (3), i.e. perpendicular to the axis of the locking bolt (2),
- during the lateral movement of the wedge slide (4) by the drive (3) of the wedge slide (4), the locking bolt (2) first rotates axially by 90° when adjusting from the unlocked state to the locked state and then is lowered axially downwards towards the loading surface, and
- when the locked state is reached, a spring-loaded safety lock (51) intrudes in the lateral movement path of the wedge slide (4) and the wedge slide (4) is prevented from being reset,
**characterized in that** simultaneously with the movement of the wedge slide (4), a horizontal locking bolt (7) in the locking housing (1) is displaced axially and horizontally, wherein the horizontal locking bolt (7) secures the gooseneck container in the loaded state arranged on the vehicle with its corner fitting horizontally adjacent and flush to the locking housing, engaging in a lateral opening in the corner fitting of the gooseneck container and securing the gooseneck container.

10. Container locking method according to Claim 7, **characterized in that** in a first part of the stroke movement of the drive (3) an idle stroke is carried out and in a second part of the stroke movement the wedge slide (4) is moved, whereby when unlocking a container or gooseneck container from the locked into the unlocked state during the first part of the stroke movement in the idle stroke the safety lock (51) is released and then during the second part of the stroke movement the wedge slide (4) is moved back, whereby the locking bolt (2) is first raised and then turned back into the unlocked state and at the same time the horizontal locking bolt (7) is retracted.

## Revendications

1. Dispositif de verrouillage de conteneur sur un véhicule (F), pour verrouiller un conteneur qui est à transporter sur une surface de chargement du véhicule et qui est muni d'un coin d'angle, lequel dispositif est muni d'un boîtier de verrouillage (1), d'un boulon de verrouillage (2) et d'un entraînement (3),
- le boulon de verrouillage (2) ayant une tige (20) et une tête de verrouillage (21) qui, à l'état déverrouillé, peut être insérée par une ouverture du coin d'angle du conteneur et qui, à l'état verrouillé, bloque le conteneur par des saillies s'engageant derrière l'ouverture du coin d'angle,
- le boulon de verrouillage (2) étant monté avec sa tige (20) dans le boîtier de verrouillage (1) de manière à pouvoir être déplacé axialement et à pouvoir tourner autour de son axe,
- une glissière en coin (4) étant montée latéralement dans le boîtier de verrouillage (1), c'est-à-dire perpendiculairement à l'axe du boulon de verrouillage (2), de manière à pouvoir effectuer un mouvement de va-et-vient et pouvant être entraînée par l'entraînement (3), et
- la glissière en coin (4) étant munie d'une rampe qui est en prise avec le boulon de verrouillage (2) pendant le mouvement latéral de la glissière en coin (4), et conférant au boulon de verrouillage (2) un mouvement axial et un mouvement de rotation de 90°,
**caractérisé en ce que**
- un boulon de verrou horizontal (7) est monté de manière à pouvoir se déplacer axialement et horizontalement dans le boîtier de verrouillage (1), un conteneur à col de cygne, à l'état chargé sur le véhicule, étant disposé avec son coin d'angle horizontalement à côté et contre le boîtier de verrouillage,
- le boulon de verrou horizontal (7) a une extrémité libre (71) qui, à l'état déverrouillé, ne saille pas latéralement hors du boîtier de verrouillage et qui, à l'état verrouillé, s'engage dans une ouverture latérale du coin d'angle du conteneur à col de cygne et fixe le conteneur à col de cygne par l'intermédiaire de l'ouverture, et
- la glissière en coin (4) est soit
a) montée de manière à pouvoir effectuer un mouvement de va-et-vient dans la direction horizontale de déplacement du boulon de verrou horizontal (7) et est reliée au boulon de verrou horizontal (7), soit
b) montée de manière à pouvoir effectuer un mouvement de va-et-vient dans un plan horizontal perpendiculaire à la direction de déplacement du boulon de verrou horizontal (7), et le boulon de verrou horizontal (7) est relié fonctionnellement à la glissière en coin (4) par l'intermédiaire d'un coulisseau en coin (8).

2. Dispositif de verrouillage de conteneur selon la revendication 1, **caractérisé en ce que** l'entraînement (3) est muni d'un vérin pneumatique à double effet (30) avec une tige de piston (31) mobile latéralement, la tige de piston (31) étant reliée fonctionnellement à la glissière en coin (4) de telle sorte que, lors de la première partie du mouvement de levage de l'entraînement (3), il se produit une première course à vide et, lors de la deuxième partie du mouvement de levage, il se produit le mouvement latéral de la cale à glissière (4).

3. Dispositif de verrouillage de conteneur selon la revendication 2, **caractérisé en ce qu'**un dispositif de blocage est disposé sur le boîtier de verrouillage (1), lequel est muni d'un élément de blocage (51) soumis à la force d'un ressort et qui est conçu de manière à pouvoir s'engager dans le trajet de déplacement latéral de la glissière en coin (4).

4. Dispositif de verrouillage de conteneur selon la revendication 3, **caractérisé en ce que** le dispositif de blocage (5) est muni d'un mécanisme de libération pour l'élément de blocage (51), qui libère l'élément de blocage (51) lors de la première course à vide.

5. Dispositif de verrouillage de conteneur selon l'une des revendications précédentes, **caractérisé en ce qu'**il est prévu un déverrouillage de secours (6) permettant de déverrouiller l'élément de blocage (51) par complémentarité de formes du dispositif de blocage (5).

6. Dispositif de verrouillage de conteneur selon la revendication 5, **caractérisé en ce que** le déverrouillage de secours (6) est muni de deux éléments de poussée (61) équipés d'un filetage extérieur, le premier élément de poussée (61) pouvant être vissé dans un premier trou taraudé (54) dans le dispositif de blocage (5) et le deuxième élément de poussée pouvant être vissé dans un deuxième trou taraudé dans le boîtier de verrouillage (1), le premier élément de poussée (61) libérant l'élément de blocage et le deuxième élément de poussée déplaçant la glissière en coin (4) pour ouvrir le verrouillage.

7. Dispositif de verrouillage de conteneur selon la revendication 1 avec la caractéristique alternative b) et l'une des revendications précédentes, **caractérisé en ce que** la glissière en coin (4) est munie d'un deuxième entraîneur (42) qui s'engage dans le coulisseau en coin (8), le coulisseau en coin (8) ayant une pente d'actionnement (81) qui coopère avec une surface d'appui (72) du boulon de verrou horizontal (7) pour le mouvement axial du boulon de verrou horizontal (7).

8. Dispositif de verrouillage de conteneur selon la revendication 7, **caractérisé en ce qu'**une deuxième course à vide est formée entre le deuxième entraîneur (42) et le coulisseau en coin (8), laquelle entraîne à sa suite le coulisseau en coin (8) lors de l'actionnement de la glissière en coin (4), et il est prévu sur la pente d'actionnement (81) une surface d'appui (82) qui est disposée perpendiculairement à la direction de déplacement du boulon de verrou horizontal (7), et qui bloque à l'état verrouillé le boulon de verrou horizontal (7) avec la surface d'appui (72) du boulon de verrou horizontal (7).

9. Procédé de verrouillage de conteneur pour un dispositif de verrouillage de conteneur sur un véhicule (F), en vue de verrouiller un conteneur à transporter sur une surface de chargement du véhicule avec un coin d'angle, présentant un boîtier de verrouillage (1), un boulon de verrouillage (2) et un entraînement (3), dans lequel
- le boulon de verrouillage (2) a une tige (20) et une tête de verrouillage (21) qui, à l'état déverrouillé, peut être insérée par une ouverture du coin d'angle du conteneur et qui, à l'état verrouillé, bloque le conteneur par des saillies s'engageant derrière l'ouverture du coin d'angle,
- le boulon de verrouillage (2) avec sa tige (20) est aussi bien déplacé axialement que tourné autour de son axe dans le boîtier de verrouillage (1),
- une glissière en coin (4) peut être déplacée latéralement dans le boîtier de verrouillage (1) par l'entraînement (3), c'est-à-dire perpendiculairement à l'axe du boulon de verrouillage (2), de manière à pouvoir effectuer un mouvement de va-et-vient,
- lors du déplacement latéral de la glissière en coin (4) par l'entraînement (3), la glissière en coin (4) fait d'abord tourner axialement le boulon de verrouillage (2) de 90° lors du passage de l'état déverrouillé à l'état verrouillé, puis l'abaisse axialement vers le bas en direction de la surface de chargement, et
- lorsque l'état verrouillé est atteint, un élément de blocage (51) soumis à la force d'un ressort s'engage dans le trajet de déplacement latéral de la glissière en coin (4) et un retour en arrière de la glissière en coin (4) est empêché,
**caractérisé, en ce que**, en même temps que le mouvement de la glissière en coin (4), un boulon de verrou horizontal (7) est déplacé axialement et horizontalement dans le boîtier de verrouillage (1), le boulon de verrou horizontal (7) s'engageant à l'état verrouillé, dans le cas d'un conteneur à col de cygne chargé, comme alternative au conteneur mentionné précédemment, à l'état chargé sur le véhicule avec son coin d'angle horizontalement à côté et contre le boîtier de verrouillage, dans le coin d'angle du conteneur à col de cygne et bloquant le conteneur à col de cygne.

10. Procédé de verrouillage de conteneur selon la revendication 9, **caractérisé en ce que** lors d'une première partie du mouvement de levage de l'entraînement (3), une course à vide est effectuée et lors d'une deuxième partie du mouvement de levage, la glissière en coin (4) est déplacée en même temps, dans lequel, lors du déverrouillage d'un conteneur ou d'un conteneur à col de cygne de l'état verrouillé à l'état déverrouillé, l'élément de blocage (51) est libéré pendant la première partie du mouvement de levage dans la course à vide, puis la glissière en coin (4) est déplacée en arrière pendant la deuxième partie du mouvement de levage, ce qui fait que le boulon de verrouillage (2) est d'abord soulevé puis tourné en arrière dans l'état déverrouillé et que le boulon de verrou horizontal (7) est simultanément rentré.
